# EUROPEAN PATENT APPLICATION

(11) **EP 4 645 970 A1**
(43) Date of publication of application: **05.11.2025**
(21) Application number: 23915338.0
(22) Date of filing: 12.01.2023
(51) Int. Cl.: H04W 56/00

(54) **COMMUNICATION METHOD AND APPARATUS**

(71) Applicant: Huawei Technologies Co., Ltd., Shenzhen, Guangdong 518129 (CN)
(72) Inventor: ZHOU, Guangjian, Shenzhen, Guangdong 518129 (CN)
(74) Representative: Thun, Clemens
(86) International application number: PCT/CN2023/071920
(87) International publication number: WO 2024/148568

(57) **Abstract**

This application discloses a communication method and apparatus. A radio frequency device receives first time information transmitted through an air interface and second time information transmitted through a fronthaul interface, and the radio frequency device sends clock offset information, where the clock offset information indicates an offset between the first time information and the second time information. The clock offset information may be applied to fault handling of the fronthaul interface, thereby reducing operation and maintenance costs and improving fault handling efficiency.

## Description

### TECHNICAL FIELD

Embodiments of this application relate to the field of communication technologies, and in particular, to a communication method and apparatus.

### BACKGROUND

In a distributed base station architecture, one baseband unit (baseband unit, BBU) may be remotely connected to a plurality of radio frequency devices, and fronthaul interfaces between different radio frequency devices and the BBU may correspond to different transmission paths. The BBU may provide a clock source for the plurality of connected radio frequency devices through fronthaul interfaces. When a transmission path is faulty, for example, transmission latency compensation on the transmission path is incorrect, time may be not synchronous between the radio frequency devices, signal interference may be generated between the radio frequency devices, and a communication service is abnormal.

Currently, when a communication service of a distributed base station is abnormal, a worker needs to carry a test device and separately check time of different radio frequency devices on site to perform fault handling. This approach relies on a manual operation and a test instrument, resulting in high operation and maintenance costs, prolonged fault handling time, and low efficiency.

### SUMMARY

This application provides a communication method and apparatus, to reduce operation and maintenance costs and improve fault handling efficiency corresponding to a fronthaul interface.

According to a first aspect, an embodiment of this application provides a communication method. The method includes: A second radio frequency device receives first time information, where the first time information is time information transmitted through an air interface; and the second radio frequency device sends clock offset information, where the clock offset information indicates an offset between the first time information and second time information, and the second time information is time information synchronized through a fronthaul interface.

In the foregoing design, in addition to synchronizing time information through a fronthaul interface, a radio frequency device may further receive other time information through an interface other than the fronthaul interface, to determine an offset between the two types of time information. Fault handling is performed on a transmission path corresponding to the fronthaul interface based on the offset between the two types of time information, without a need of manual intervention or an additional test instrument, thereby reducing operation and maintenance costs and improving fault handling efficiency.

In a possible design, the second radio frequency device receives first information, where the first information indicates identification information of a first device, and the first time information received by the second device is from the first device. Based on such a design, the second radio frequency device can determine a source of the first time information.

In a possible design, the first device is a first radio frequency device, a satellite device, or a relay device, and the relay device is a device between a second radio frequency device corresponding to the fronthaul interface and the first radio frequency device or the satellite device. For example, the relay device may be a terminal device. Such a design may be adapted to a scenario of a terrestrial communication network or a non-terrestrial communication network, and air-interface synchronization can be flexibly implemented.

In a possible design, the clock offset information is used for fault determining for a transmission path corresponding to the fronthaul interface.

In a possible design, the clock offset information may further include the identification information of the first device. Such a design helps a recipient of the clock offset information to determine that the clock offset information is specifically an offset between a device corresponding to which air interface and synchronization time information corresponding to the fronthaul interface, thereby assisting in subsequent fault handling and improving fault handling efficiency.

In a possible design, the first device is time-synchronized with a radio frequency control device corresponding to the fronthaul interface. Such a design can avoid interference to fault determining caused by time asynchronization of the clock source, and lock fault determining to the transmission path corresponding to the fronthaul interface, thereby improving efficiency and accuracy of fault determining.

In a possible design, the first time information is transmitted on an uplink resource. In this design, the first device may be considered as a terminal of the second radio frequency device. The first time information is transmitted by using a configured uplink resource, and no new definition and configuration are required, so that complexity of the solution can be reduced.

In a possible design, the second radio frequency device may further receive second information, where the second information indicates identification information of a second device, so that the second radio frequency device sends the clock offset information to the second device. In this design, the recipient of the clock offset information is configured by using indication information, to facilitate method implementation. For example, the second device is a radio frequency control device corresponding to the fronthaul interface, or a switch device or a network management device corresponding to the fronthaul interface. In other words, it may be understood that any implementation of the second device may be used for fault handling, and can be flexibly adapted to a plurality of scenarios.

According to a second aspect, an embodiment of this application provides a communication method, where the method includes: A second device receives clock offset information, where the clock offset information indicates an offset between first time information and second time information, the first time information is time information transmitted through an air interface, and the second time information is time information synchronized through a fronthaul interface; and the second device determines, based on the clock offset information, whether a fault exists on a transmission path corresponding to the fronthaul interface.

In a possible design, the second device may further send the clock offset information to a network management device.

In a possible design, the first time information is from a first device, and the clock offset information includes identification information of the first device.

In a possible design, the first device is a first radio frequency device, a satellite device, or a relay device, and the relay device is a device between a second radio frequency device corresponding to the fronthaul interface and the first radio frequency device or the satellite device.

In a possible design, the first device is time-synchronized with a radio frequency control device corresponding to the fronthaul interface.

In a possible design, the second device is a radio frequency control device corresponding to the fronthaul interface, or a switch device or a network management device corresponding to the fronthaul interface.

According to a third aspect, an embodiment of this application provides a communication apparatus. The communication apparatus may be a second radio frequency device, or may be an apparatus, a module, a chip, or the like in the second radio frequency device, or may be an apparatus that can be used in a matching manner with the second radio frequency device. In a design, the communication apparatus may include modules that are in one-to-one correspondence with the methods/operations/steps/actions described in the first aspect. The modules may be implemented by a hardware circuit, software, or a combination of a hardware circuit and software. In a design, the communication apparatus may include a processing module and a communication module.

The communication module is configured to receive first time information, where the first time information is time information transmitted through an air interface; and the processing module is configured to send clock offset information through the communication module, where the clock offset information indicates an offset between the first time information and second time information, and the second time information is time information synchronized through a fronthaul interface.

In a possible design, the communication module is further configured to receive first information, where the first information indicates identification information of a first device. The first time information received by the communication module is from the first device.

In a possible design, the first device is a first radio frequency device, a satellite device, or a relay device, and the relay device is a device between a second radio frequency device corresponding to the fronthaul interface and the first radio frequency device or the satellite device.

In a possible design, the first device is time-synchronized with a radio frequency control device corresponding to the fronthaul interface.

In a possible design, the clock offset information is used for fault determining for a transmission path corresponding to the fronthaul interface.

In a possible design, the first time information is transmitted on an uplink resource.

In a possible design, the communication module is further configured to: receive second information, where the second information indicates identification information of a second device; and send the clock offset information to the second device.

In a possible design, the second device is a radio frequency control device corresponding to the fronthaul interface, or a switch device or a network management device corresponding to the fronthaul interface.

In a possible design, the clock offset information includes the identification information of the first device.

According to a fourth aspect, an embodiment of this application provides a communication apparatus. The communication apparatus may be a second device, or may be an apparatus, a module, a chip, or the like in the second device, or may be an apparatus that can be used in a matching manner with the second device. In a design, the communication apparatus may include modules that are in one-to-one correspondence with the methods/operations/steps/actions described in the second aspect. The modules may be implemented by a hardware circuit, software, or a combination of hardware circuit and software. In a design, the communication apparatus may include a processing module and a communication module.

The communication module is configured to receive clock offset information, where the clock offset information indicates an offset between first time information and second time information, the first time information is time information transmitted through an air interface, and the second time information is time information synchronized through a fronthaul interface; and
the processing module is configured to determine, based on the clock offset information, whether a fault exists on a transmission path corresponding to the fronthaul interface.

In a possible design, the communication module is further configured to send the clock offset information to a network management device.

In a possible design, the first time information is from a first device, and the clock offset information includes identification information of the first device.

In a possible design, the first device is a first radio frequency device, a satellite device, or a relay device, and the relay device is a device between a second radio frequency device corresponding to the fronthaul interface and the first radio frequency device or the satellite device.

In a possible design, the first device is time-synchronized with a radio frequency control device corresponding to the fronthaul interface.

In a possible design, the second device is a radio frequency control device corresponding to the fronthaul interface, or a switch device or a network management device corresponding to the fronthaul interface.

According to a fifth aspect, an embodiment of this application provides a communication apparatus. The communication apparatus includes a processor, configured to implement the method described in the first aspect. The processor is coupled to a memory, the memory is configured to store instructions and data, and when the processor executes the instructions stored in the memory, the method described in the first aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

The communication interface is configured to receive first time information, where the first time information is time information transmitted through an air interface; and the processor is configured to send clock offset information through the communication interface, where the clock offset information indicates an offset between the first time information and second time information, and the second time information is time information synchronized through a fronthaul interface.

According to a sixth aspect, an embodiment of this application provides a communication apparatus. The communication apparatus includes a processor, configured to implement the method described in the second aspect. The processor is coupled to a memory. The memory is configured to store instructions and data. When the processor executes the instructions stored in the memory, the method according to the second aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

The communication interface is configured to receive clock offset information, where the clock offset information indicates an offset between first time information and second time information, the first time information is time information transmitted through an air interface, and the second time information is time information synchronized through a fronthaul interface; and
the processor is configured to determine, based on the clock offset information, whether a fault exists on a transmission path corresponding to the fronthaul interface.

According to a seventh aspect, an embodiment of this application provides a communication system, including the communication apparatus according to the third aspect or the fifth aspect, and the communication apparatus according to the fourth aspect or the sixth aspect.

According to an eighth aspect, an embodiment of this application further provides a computer program. When the computer program is run on a computer, the computer is enabled to perform the method according to the first aspect or the second aspect.

According to a ninth aspect, an embodiment of this application further provides a computer program product, including instructions. When the instructions are run on a computer, the computer is enabled to perform the method according to the first aspect or the second aspect.

According to a tenth aspect, an embodiment of this application further provides a computer-readable storage medium. The computer-readable storage medium stores a computer program or instructions. When the computer program or the instructions are run on a computer, the computer is enabled to perform the method according to the first aspect or the second aspect.

According to an eleventh aspect, an embodiment of this application further provides a chip. The chip is configured to read a computer program stored in a memory, to perform the method according to the first aspect or the second aspect, or the chip includes a circuit configured to perform the method according to the first aspect or the second aspect.

According to a twelfth aspect, an embodiment of this application further provides a chip system. The chip system includes a processor, configured to support an apparatus in implementing the method according to the first aspect or the second aspect. In a possible design, the chip system further includes a memory, and the memory is configured to store a program and data that are necessary for the apparatus. The chip system may include a chip, or may include a chip and another discrete component.

For effects of the solution provided in any one of the second aspect to the twelfth aspect, refer to corresponding descriptions in the first aspect.

### BRIEF DESCRIPTION OF DRAWINGS

FIG. 1 is a diagram of a structure of a communication system;
FIG. 2A is a diagram of a radio access network RAN;
FIG. 2B is a diagram of functional modules of an access network device;
FIG. 2C is a diagram of division into functional module of a physical layer;
FIG. 2D is another diagram of division into functional modules of a physical layer;
FIG. 3A is a diagram of a structure of a distributed base station;
FIG. 3B is a diagram of a structure of a distributed base station;
FIG. 3C is a diagram of signal interference;
FIG. 4A is a diagram of a structure of a fronthaul network;
FIG. 4B is a schematic flowchart of a communication method;
FIG. 5 is a diagram of a structure of a communication apparatus;
FIG. 6A to FIG. 6E are diagrams of structures of radio frequency devices in a distributed base station; and
FIG. 7 is a diagram of a structure of another communication apparatus.

### DESCRIPTION OF EMBODIMENTS

To make objectives, technical solution, and advantages of embodiments of this application clearer, the following further describes embodiments of this application in detail with reference to the accompanying drawings.

At least one (item) related in embodiments of this application indicates one or more (items). "A plurality of (items)" means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as "first" and "second" may be used in embodiments of this application to describe objects, these objects should not be limited by these terms. These terms are merely used to distinguish the objects from each other.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "exemplary" or "for example" is used to represent giving an example, an illustration, or a description. Any method or design solution described as an "example" or "for example" in embodiments of this application should not be explained as being more preferred or having more advantages than another method or design solution. To be precise, use of the word such as "example" or "for example" is intended to present a relative concept in a specific manner.

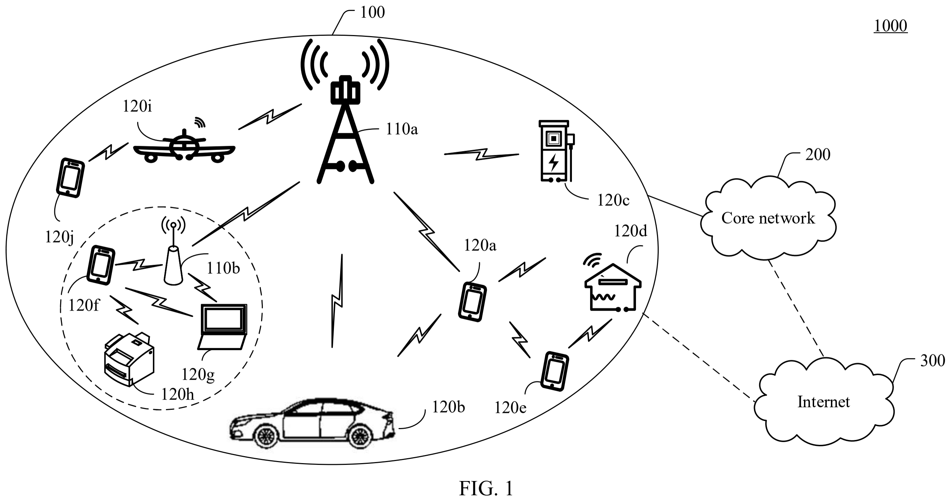

Technologies provided in embodiments of this application may be applied to various communication systems. FIG. 1 is a diagram of a possible and non-limiting communication system. As shown in FIG. 1, a communication system 1000 includes a radio access network (radio access network, RAN) 100 and a core network (core network, CN) 200. The RAN 100 includes at least one RAN node (for example, 110a and 110b in FIG. 1, collectively referred to as 110) and at least one terminal (for example, 120a to 120j in FIG. 1, collectively referred to as 120). The RAN 100 may also include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. The RAN node 110 is configured to help the terminal implement radio access. A core network device in the core network 200 and the RAN node 110 in the RAN 100 may be different physical devices, or may be a same physical device that integrates a logical function of the core network and a logical function of the radio access network. Optionally, the RAN node 110 may be further connected to the Internet 300, or connected to the Internet 300 by using the core network 200.

The RAN 100 may be a cellular system related to the 3^{rd} Generation Partnership Project (3^{rd} generation partnership project, 3GPP), for example, a 4^{th} generation (4^{th} generation, 4G) or a 5^{th} generation (5^{th} generation, 5G) mobile communication system, or a future-oriented evolved system (for example, a 6G mobile communication system). The RAN 100 may alternatively be an open radio access network (open RAN, O-RAN, or ORAN) or a cloud radio access network (cloud radio access network, CRAN). The RAN 100 may alternatively be a communication system that integrates the foregoing two or more systems. The 4G mobile communication system includes a long term evolution (long term evolution, LTE) system, and the 5G mobile communication system includes a new radio (new radio, NR) system.

The plurality of RAN nodes 110 in the communication system 1000 may be a same category of nodes, or may be different categories of nodes. In some scenarios, roles of the RAN node 110 and the terminal 120 are relative to each other. For example, the network element 120i in FIG. 1 may be a helicopter or an unmanned aerial vehicle, and may be configured as a mobile base station. For the terminal 120j that accesses the RAN 100 by using the network element 120i, the network element 120i is a base station. However, for the base station 110a, the network element 120i is a terminal. Both the RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

The following describes the terminal and the RAN node in detail.

### (1) Terminal

The terminal may alternatively be referred to as a terminal device, user equipment (user equipment, UE), a mobile station, a mobile terminal, or the like. The terminal may be a user-side entity configured to receive or transmit a signal. The terminal may communicate with one or more core networks by using a RAN. The terminal includes a handheld device having a wireless connection function, another processing device connected to a wireless modem, a vehicle-mounted device, or the like. The communication device may be a portable, pocket-sized, handheld, computer built-in, or vehicle-mounted mobile apparatus. The terminal may be widely applied to various scenarios, for example, cellular communication, device-to-device (device-to-device, D2D), vehicle to everything (vehicle to everything, V2X) communication, end-to-end P2P, machine to machine M2M, machine-type communication (machine-type communication, MTC), Internet of Things (internet of things, IoT), virtual reality (virtual reality, VR), augmented reality (augmented reality, AR), industrial control, self-driving, telemedicine, smart grid, smart furniture, smart office, smart wearables, smart transportation, smart city, mobile phones, tablet computers, computers with a wireless transceiver function, wearable devices, vehicles, unmanned aerial vehicles, helicopters, aircrafts, ships, robots, robot arms, and smart home devices. A device form of the terminal is not limited in embodiments of this application.

### (2) RAN node

In a possible scenario, the RAN node may alternatively be referred to as an access network device, a RAN entity, an access node, a network device, or the like, and forms a part of a communication system, to help a terminal implement radio access. The RAN node may be a base station (base station, BS), an evolved base station (evolved base station, eNB), an access point (access point, AP), a transmission reception point (transmission reception point, TRP), a next generation NodeB (next generation NodeB, gNB), a next generation base station in a 6^{th} generation (6^{th} generation, 6G) mobile communication system, a base station in a future mobile communication system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU).

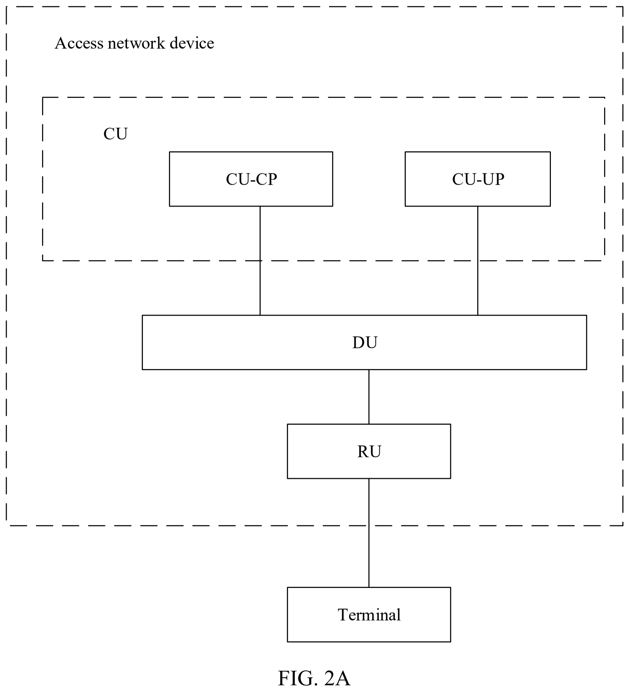

In another possible scenario, a plurality of RAN nodes coordinate to assist a terminal in implementing radio access, and different RAN nodes separately implement some functions of an access network device. FIG. 2A is a diagram of a radio access network RAN. As shown in FIG. 2A, an access network device includes a central unit (central unit, CU), a distributed unit (distributed unit, DU), and a radio unit (radio unit, RU). The CU may be connected to a core network and one or more DUs. One DU may be connected to one or more RUs, and an interface between the DU and the RU may be referred to as a fronthaul interface (fronthaul, FH). Optionally, the CU may have some functions of the core network, and the CU includes a CU-control plane (control plane, CP) and a CU-user plane (user plane, UP). The RU is configured to send a signal to a terminal or receive a signal from the terminal. For example, a RAN node may be a CU, a DU, a CU-CP, a CU-UP, or an RU.

In a possible implementation, the CU and the DU are included in a same network element, for example, a baseband unit (baseband unit, BBU). The RU may be included in a radio frequency device (or referred to as a radio frequency unit), for example, included in a remote radio unit (remote radio unit, RRU), an active antenna unit (active antenna unit, AAU), or a remote radio head (remote radio head, RRH). An interface between the BBU and the radio frequency device may alternatively be referred to as a fronthaul interface. In addition, optionally, to implement a fronthaul interface, the DU and the RU may be connected by using a fronthaul network, or the BBU and the radio frequency device may be connected by using a fronthaul network. For example, the fronthaul network includes but is not limited to a fiber direct connection and a wavelength division network. The BBU and the radio frequency device may be integrated in one cabinet; or the BBU and the radio frequency device may be separated. For example, the BBU is installed in a cabinet, and the radio frequency device is deployed at a remote end, for example, in a place where signal coverage is required. An access network device in which the BBU and the radio frequency device are separated may be understood as a distributed access network device, or referred to as a distributed base station.

It may be understood that in different systems, the CU (or the CU-CP and the CU-UP), the DU, or the RU may alternatively have different names, but a person skilled in the art may understand meanings of the names. For example, in an ORAN system, the CU may alternatively be referred to as an O-CU (open CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

### (3) Division into power modules of an access network device

Communication between an access network device and a terminal complies with a specific protocol layer structure. The protocol layer may include a control plane protocol layer and a user plane protocol layer. For example, the control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like. The CU and the DU may be configured based on a protocol layer function of a radio network implemented thereby. For example, the CU is configured to implement functions of the PDCP layer and an upper protocol layer (for example, the RRC layer and/or the SDAP layer), and the DU is configured to implement a function of a protocol layer below the PDCP layer (for example, the RLC layer, the MAC layer, and/or the PHY layer). For another example, the CU is configured to implement a function of a protocol layer above the PDCP layer (for example, the RRC layer and/or the SDAP layer), and the DU is configured to implement functions of the PDCP layer and a lower protocol layer (for example, the RLC layer, the MAC layer, and/or the PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement a function of the RRC layer and a control plane function of the PDCP layer, and the CU-UP is configured to implement a function of the SDAP layer and a user plane function of the PDCP layer.

The foregoing configuration of the CU or the DU is merely an example, and functions of the CU or the DU may alternatively be configured based on a requirement. For example, the CU or the DU may be configured to have functions of more protocol layers, or the CU or the DU may be configured to have some processing functions of protocol layers. For example, some functions of the RLC layer and functions of protocol layers above the RLC layer are set on the CU, and remaining functions of the RLC layer and functions of protocol layers below the RLC layer are set on the DU. For another example, division into functions of the CU or the DU may be performed based on service types or other system requirements. For example, division may be performed based on latencies. Functions whose processing time needs to satisfy a low latency requirement are set on the DU, and functions whose processing time does not need to satisfy the latency requirement are set on the CU.

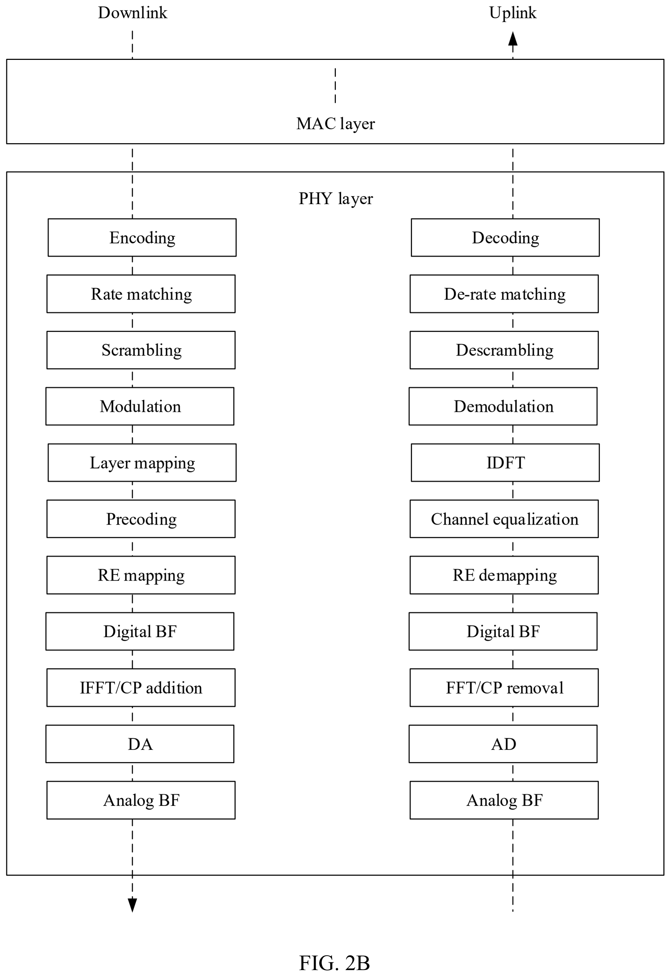

Optionally, the DU and the RU may cooperate to jointly implement a function of the PHY layer. As shown in FIG. 2B, an access network device includes one or more functional modules, configured to implement signal processing. Using the function of the physical layer as an example, the access network device includes one or more of the following functional modules: encoding, rate matching, scrambling, modulation, layer mapping, precoding, resource element (resource element, RE) mapping, digital beamforming (beamforming, BF), inverse fast Fourier transformation (inverse fast fourier transformation, IFFT)/cyclic prefix (cyclic prefix, CP) addition, decoding, de-rate matching, descrambling, demodulation, inverse discrete Fourier transformation (inverse discrete fourier transformation, IDFT), channel equalization (or channel estimation), RE demapping, digital BF, and fast Fourier transform (fast Fourier transform, FFT)/CP removal, digital to analog (digital to analog, DA) conversion, analog BF, analog to digital (analog to digital, AD) conversion, or analog BF.

The one or more functional modules may be implemented by using software, hardware, or a combination of software and hardware. Physically, the functional modules may be discrete or integrated. It may be understood that the foregoing functional modules are merely examples. The access network device may include more other modules (for example, a scheduling module, a power control module, a hybrid automatic repeat request (hybrid automatic repeat request, HARQ) module, a flow control module, a mobility management module, or an artificial intelligence (artificial intelligence, AI) module) according to a design, or do not include a functional module shown in FIG. 2B (for example, do not include the digital BF module).

Functions of the DU and the RU may be configured in a plurality of manners based on a design.

For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. A higher-layer function of the physical layer may include a part of functions of the physical layer, and this part of functions are closer to the MAC layer. The lower-layer function of the physical layer may include another part of functions of the physical layer, and this part of functions are closer to an intermediate radio frequency side.

There is a fronthaul interface between the DU and the RU. For example, a communication protocol of the fronthaul interface may be a common public radio interface (common public radio interface, CPRI) interface protocol, an enhanced common public radio interface (enhanced common public radio interface, eCPRI) interface protocol, or the like. This is not limited. Different fronthaul interfaces correspond to DUs and RUs with different functions.

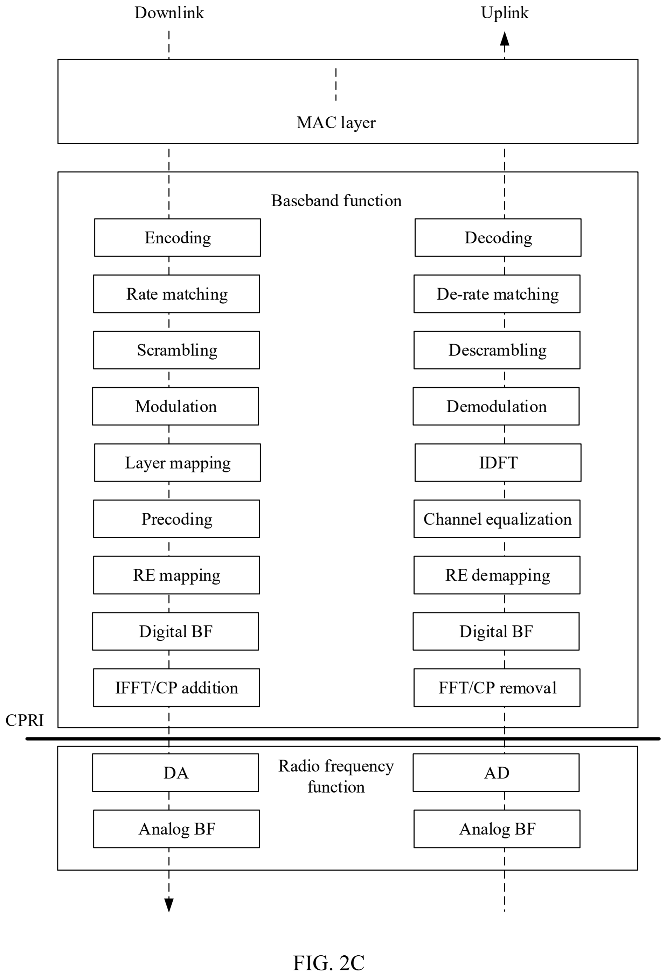

As shown in FIG. 2C, if the fronthaul interface between the DU and the RU is a CPRI, PHY functions shown in FIG. 2B are divided into baseband functions and radio frequency functions. The DU is configured to implement one or more of the baseband functions, and the RU is configured to implement one or more of the radio frequency functions.

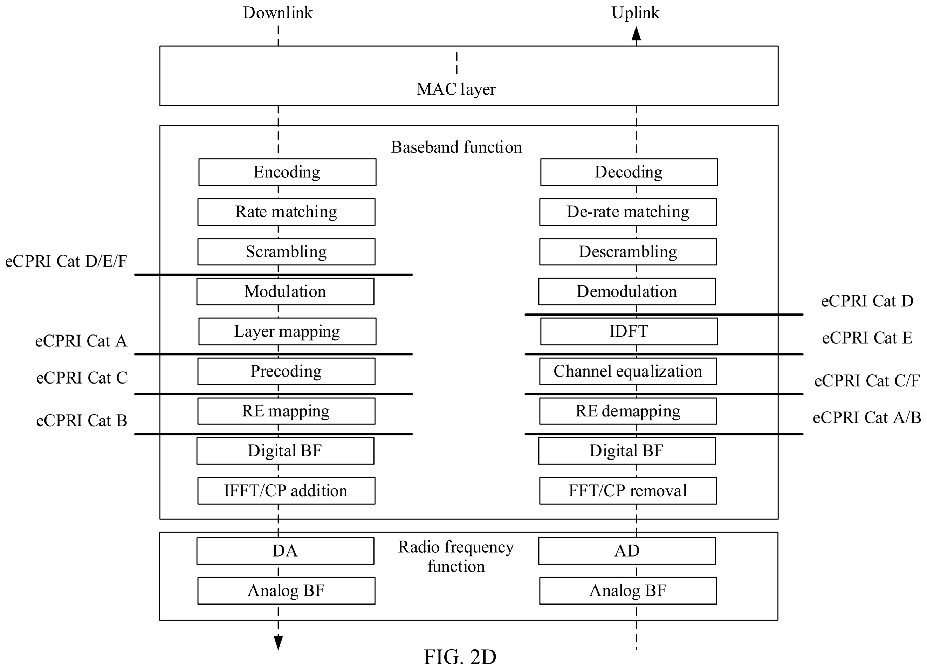

As shown in FIG. 2D, if the fronthaul interface between the DU and the RU is an eCPRI, compared with a CPRI, some downlink and/or uplink baseband functions are moved from the DU to the RU for implementation. Different split manners between the DU and the RU correspond to different categories (category, Cat for short) of eCPRIs. FIG. 2D provides six examples of the eCPRI, which are represented by Cat A, B, C, D, E, and F (which may alternatively be represented as Options A to F, Options 1 to 6, or another manner). It may be understood that there may be another split manner between the DU and the RU, that is, there may be another category of eCPRI.

Using eCPRI Cat A as an example, for downlink transmission, layer mapping is used as a split. The DU is configured to implement layer mapping and one or more previous functions (that is, one or more of encoding, rate matching, scrambling, modulation, and layer mapping), and another function (for example, RE mapping, digital BF, or IFFT/CP addition) after layer mapping is moved to the RU for implementation. For uplink transmission, RE demapping is used as a split. The DU is configured to implement demapping and one or more previous functions (that is, one or more of decoding, de-rate matching, descrambling, demodulation, IDFT, channel equalization, and RE demapping), and another function (for example, one or more of digital BF or FFT/CP removal) after demapping is moved to the RU for implementation.

Similarly, eCPRI Cat B, Cat C, Cat D, Cat E, and Cat F correspond to different split manners between the DU and the RU. A split point and a function before the split point are implemented by the DU, and a function after the split point is implemented by the RU. For split points of various types of eCPRIs, refer to FIG. 2D, and details are not described one by one. For example, for eCPRI Cat B, RE mapping is used as a split for downlink transmission, and RE demapping is used as a split for uplink transmission. For uplink transmission, RE mapping and a function before RE mapping are implemented by the DU, and a function after RE mapping and a radio frequency function are implemented by the RU. For downlink transmission, RE demapping and a function before RE demapping are implemented by the DU, and a function after RE demapping and a radio frequency function are implemented by the RU.

Split manners of eCPRIs may be symmetric for uplink and downlink, for example, eCPRI Cat B and Cat C shown in FIG. 2D; or split manners of eCPRIs may be asymmetric for uplink and downlink, for example, eCPRI Cat A, Cat D, Cat E, and Cat F shown in FIG. 2D, which is not limited. Optionally, for uplink and/or downlink, different split manners may be configured for different channels or different channel groups, that is, different categories of eCPRIs are configured. One group of channels may include one or more channels.

In a possible design, the DU is located in the BBU, the RU is located in the RRU/AAU/RRH, a processing unit in the BBU and configured to implement a baseband function is referred to as a base band high (base band high, BBH) unit, and a processing unit in the RRU/AAU/RRH and configured to implement a baseband function is referred to as a base band low (base band low, BBL) unit.

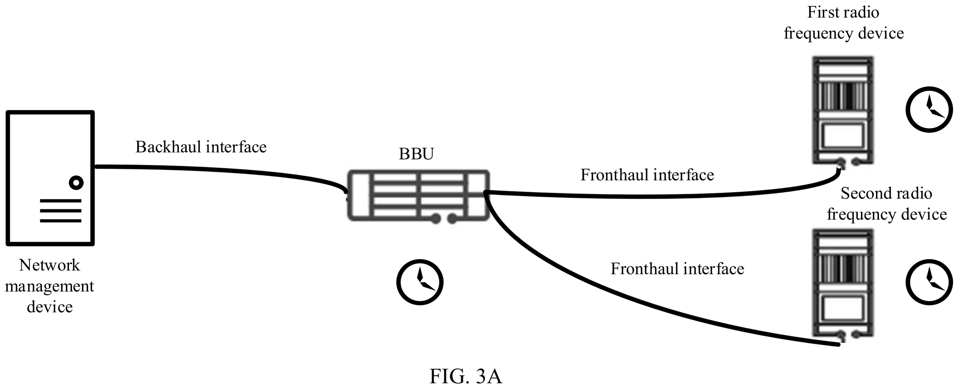

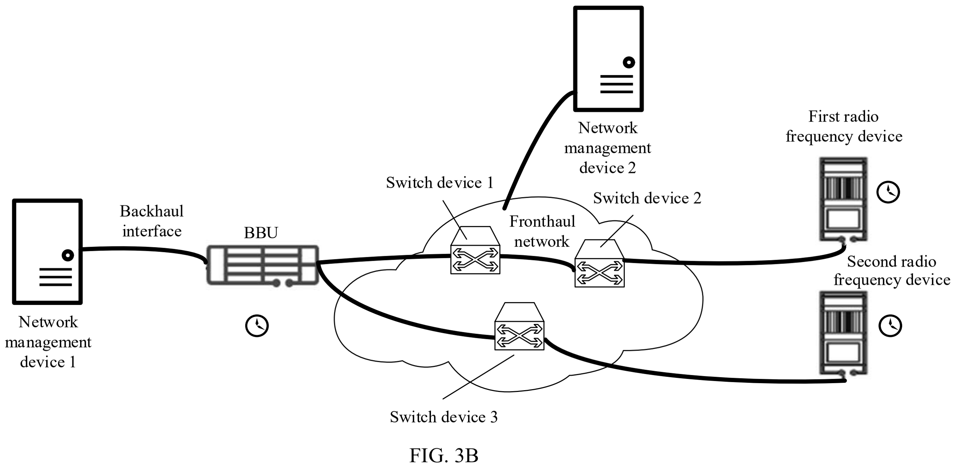

Embodiments of this application relate to a synchronization processing technology of the fronthaul interface. The fronthaul interface between the BBU and the radio frequency device is used as an example. In an optional implementation, the BBU may be directly connected to at least one of a plurality of radio frequency devices by using a transmission medium such as an optical fiber (optical cable) or an electrical cable, and fronthaul interfaces between the BBU and different radio frequency devices correspond to different transmission paths. As shown in FIG. 3A, a distributed base station includes one BBU and two radio frequency devices, that is, a first radio frequency device and a second radio frequency device. The BBU and the two radio frequency devices may be connected by using different optical fibers. In another optional implementation, the BBU and the radio frequency device may be alternatively connected to each other by using a fronthaul network (fronthaul network) including one or more switch devices. Such a fronthaul network may alternatively be referred to as fronthaul networking. A single radio frequency device may be connected to the BBU by using a one-hop or multi-hop switch device. Switch devices connected between different radio frequency devices and the BBU may be different. Alternatively, it may be understood that fronthaul interfaces between different radio frequency devices and the BBU correspond to different transmission paths, and different transmission paths pass through different switch devices. For example, as shown in FIG. 3B, a distributed base station includes one BBU and two radio frequency devices, that is, a first radio frequency device and a second radio frequency device. The BBU is connected to a switch device in a fronthaul network by using an optical fiber, and the two radio frequency devices are connected to switch devices in the fronthaul network by using optical fibers. The first radio frequency device is connected to the BBU by using a switch device 1 and a switch device 2 in the fronthaul network, and the second radio frequency device is connected to the BBU by using a switch device 3 in the fronthaul network. In addition, FIG. 3A and FIG. 3B further show that the BBU may be connected to a network management device, and an interface between the network management device and the BBU may be referred to as a backhaul interface. Optionally, the fronthaul network shown in FIG. 3B may further be connected to an additional network management device, and the additional network management device may manage the switch device in the fronthaul network. For differentiation, in FIG. 3B, the network management device connected to the BBU by using the backhaul interface is denoted as a network management device 1, and the additional network management device connected to the fronthaul network is denoted as a network management device 2.

The BBU provides a clock source for a plurality of connected radio frequency devices through fronthaul interfaces. The radio frequency devices maintain clock or time synchronization with the BBU. Clock synchronization, also referred to as frequency synchronization, means maintaining a strict specific relationship between frequencies or phases of signals. For example, a signal appears at a same average rate at a corresponding effective moment or effective time period, so as to maintain that all devices in a communication network run at a same rate. For example, that the radio frequency device keeps clock synchronization with the BBU may be understood as that a local clock of the radio frequency device traces a clock source (that is, a clock of the BBU) to achieve frequency synchronization, and transmit/receive clocks of the radio frequency device and the BBU are synchronous. Time synchronization, also referred to as phase synchronization, means that frequencies and phases of signals are consistent. For example, that the radio frequency device keeps time synchronization with the BBU may be understood as that a local clock of the radio frequency device traces a clock source (that is, a clock of the BBU) to achieve phase synchronization.

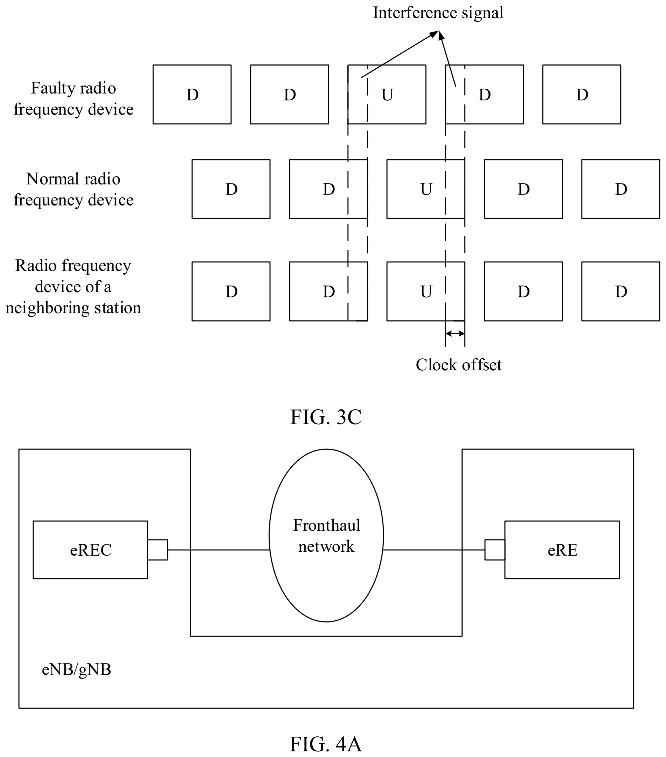

As shown in FIG. 3A or FIG. 3B, because transmission paths corresponding to fronthaul interfaces between the BBU and different radio frequency devices are different, when a transmission path is abnormal, for example, a transmission latency compensation error occurs on the transmission path, time synchronization between a radio frequency device corresponding to the transmission path and the BBU is incorrect. Uplink/downlink transmission of the radio frequency device causes signal interference to uplink/downlink transmission of another radio frequency device that is time-synchronized with the BBU, and causes a communication service abnormality. An unsynchronized radio frequency device may alternatively be described as a faulty radio frequency device, and a synchronized radio frequency device may include a normal radio frequency device in a base station to which the faulty radio frequency device belongs or a radio frequency device in a neighboring base station of a base station to which the faulty radio frequency device belongs. As shown in FIG. 3C, "D" represents downlink transmission, and "U" represents uplink transmission. There is a clock offset between a faulty radio frequency device and another synchronized radio frequency device, for example, a normal radio frequency device of a local station or a radio frequency device of a neighboring station, in uplink and downlink transmission. The clock offset may alternatively be referred to as a phase offset. A faulty radio frequency device causes signal interference to uplink/downlink transmission of a synchronized radio frequency device, such as another radio frequency device of a same base station or a radio frequency device of a neighboring base station. As a result, a communication service is abnormal.

Currently, when a communication service abnormality occurs in a distributed base station, a worker needs to carry a test device such as a time test instrument or a sweep generator to a site to detect a clock of a radio frequency device. For example, if it is determined that a clock offset between a clock of a radio frequency device and an expected clock does not meet a requirement, the radio frequency device may be disconnected from a BBU, and troubleshooting is performed on a transmission path corresponding to a fronthaul interface between the radio frequency device and the BBU. When it is determined that a fault exists, after the fault is rectified so that the clock offset between the clock of the radio frequency device and the expected clock meets the requirement, the radio frequency device is reconnected to a network to restore a related communication service. Such a design relies on a manual operation and a test instrument, resulting in high operation and maintenance costs, prolonged fault handling time, and low efficiency.

Based on this, an embodiment of this application provides a communication method. In addition to synchronizing time information through a fronthaul interface, a radio frequency device may further receive other time information through an interface other than the fronthaul interface, to determine an offset between the two types of time information. The communication method is applied to the foregoing distributed base station, and fault handling, for example, including processing operations such as fault determining (or troubleshooting), fault isolation, and fault recovery, is performed on a transmission path corresponding to the fronthaul interface based on the offset between the two types of time information. Manually carrying a test instrument is not required, which can reduce operation and maintenance costs and improve fault handling efficiency.

From a perspective of a radio frequency device, the foregoing BBU may alternatively be described as a radio frequency control device. One end of the fronthaul interface is the radio frequency control device, and the other end is the radio frequency device. The radio frequency control device and the radio frequency device may alternatively be named according to a communication protocol of the fronthaul interface. The radio frequency control device and the radio frequency device may be directly connected by using an optical fiber, or may be indirectly connected by using a one-hop or multi-hop switch device in a fronthaul network. For example, as shown in FIG. 4A, when the communication protocol of the fronthaul interface is an eCPRI protocol, the radio frequency control device may be eCPRI radio equipment control (eCPRI radio equipment control, eREC), and the radio frequency device may be eCPRI radio equipment (eCPRI radio equipment, eRE). For another example, in an ORAN system, the radio frequency control device may be a DU, a CU, or a BBU, and the radio frequency device may be an RU, an RRU, an AAU, or an RRH.

The following uses a fronthaul interface between a radio frequency control device and a second radio frequency device as an example to describe in detail the communication method provided in this embodiment of this application.

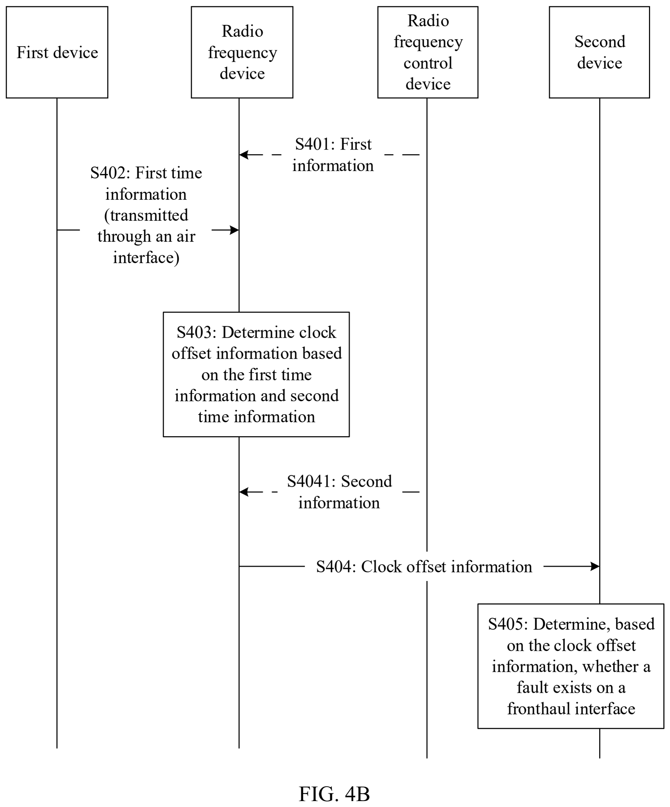

As shown in FIG. 4B, the communication method mainly includes the following procedure.

S401: The radio frequency control device sends first information to the second radio frequency device.

The first information is used to trigger the second radio frequency device to receive first time information through an air interface. Optionally, the first information indicates identification information of a first device. The second radio frequency device may determine, based on the first information, that the first time information from the first device is received through the air interface.

In this application, "sending information (for example, the first information) to a device (for example, the second radio frequency device)" may be understood as that a destination end of the information is the device. "Sending information (for example, the first information) to a device (for example, the second radio frequency device)" may include directly or indirectly sending the information to the device. Necessary processing, such as format change or frequency conversion, may be performed on information between a source end and a destination end of information transmission, but the destination end may understand valid information from the source end. Similar descriptions in this application may be understood similarly, and details are not described herein.

In this application, "... receiving information through an air interface, for example, receiving the first time information" may be understood as that the information is transmitted through the air interface. "... receiving information through an air interface, for example, receiving the first time information" may include directly or indirectly receiving the information. Necessary processing, such as format change or frequency conversion, may be performed on information between a source end and a destination end of information transmission, but the destination end may understand valid information from the source end. Similar descriptions in this application may be understood similarly, and details are not described herein.

In this application, "... receiving information from a device (for example, the first device)" or "receiving, from a device (for example, the first device), information" may be understood as that a source end of the information is the device. "... receiving information from a device (for example, the first device)" or "receiving information from a device (for example, the first device)" may include directly or indirectly receiving the information from the device. Necessary processing, such as format change or frequency conversion, may be performed on information between a source end and a destination end of information transmission, but the destination end may understand valid information from the source end. Similar descriptions in this application may be understood similarly, and details are not described herein.

For example, the first device may be a first radio frequency device, and the first information indicates identification information of the first radio frequency device. The first radio frequency device and the second radio frequency device are connected to a same radio frequency control device. A transmission path corresponding to a fronthaul interface between the first radio frequency device and the radio frequency control device is different from a transmission path corresponding to a fronthaul interface between the second radio frequency device and the radio frequency control device. The first radio frequency device and the second radio frequency device belong to a same distributed base station, or the first radio frequency device belongs to a neighboring base station of a distributed base station to which the second radio frequency device belongs. Optionally, the neighboring base station and the distributed base station to which the second radio frequency device belongs have a same frequency.

For example, the first device may be a satellite device, and the first information indicates identification information of the satellite device. Optionally, an external clock source referenced by the radio frequency control device may be provided by the satellite device, or an external clock source referenced by the radio frequency control device may keep time synchronization with a clock source provided by the satellite device.

For another example, the first device may be a relay device. In an optional implementation, the relay device may be a device between the second radio frequency device and the first radio frequency device, for example, may be a terminal device that performs uplink/downlink transmission with the first radio frequency device and the second radio frequency device. In downlink transmission, the terminal device may receive the first time information from the first radio frequency device. In uplink transmission, the terminal device may forward the first time information to the second radio frequency device. Similarly, in another optional implementation, the relay device may be a device between the second radio frequency device and a satellite device, for example, a terminal device or a receiver that can receive information from the satellite device.

Optionally, the first device and the radio frequency control device connected to the second radio frequency device are time-synchronized. The second radio frequency device is connected to the radio frequency control device through the fronthaul interface. Therefore, it may also be understood that the first device is time-synchronized with the radio frequency control device corresponding to the fronthaul interface.

In addition, optionally, it may be predefined that the second radio frequency device receives the first time information through the air interface, and it is predefined that a source of the first time information is the first device, where the first device is one of the first radio frequency device, the satellite device, or the relay device. In a scenario in which a predefined manner is used, S401 may not be performed, that is, S401 is an optional step and is shown by using a dashed line in FIG. 4B.

S402: The second radio frequency device receives first time information from a first device through an air interface.

The first time information includes first absolute time, and the first absolute time may be accurate to a time unit such as year, month, day, hour, minute, second, millisecond, microsecond, or nanosecond. For example, the first absolute time is accurate to within 1 second, and the first absolute time is 06:30:30:10 on December 1, 2022. For another example, the first absolute time may be accurate to second, and the first absolute time is 06:30:30 on December 1, 2022. Optionally, the first absolute time may be understood with reference to time in a universal time coordinated (universal time coordinated, UTC) system. When the first absolute time is accurate to second, the first time information further includes information used to determine a time phase within 1 second. The first time information may alternatively be described as first clock synchronization information, air-interface synchronization information, air-interface synchronization phase information, or another name.

In this embodiment of this application, an example in which the first absolute time is accurate to second is used to describe a manner in which the second radio frequency device receives the first time information.

When the first device is the first radio frequency device or a device between the first radio frequency device and the second radio frequency device, that the second radio frequency device receives first time information may include: The second radio frequency device receives a system information (system information, SIB) message from the first radio frequency device through the air interface, where for example, the SIB message may be SIB9, and the SIB message carries the first absolute time; and the second radio frequency device receives a radio signal from the first radio frequency device through the air interface, and determines a time phase within 1 second based on radio frame boundary pulse information corresponding to the radio signal. Optionally, the radio frame boundary pulse information may alternatively be described as time-scale information, and the first absolute time may be understood as absolute time information corresponding to the time-scale information.

For example, when the first device is the first radio frequency device, the first radio frequency device may send the first time information by using a downlink transmission resource, and a receiving module that can receive a downlink signal is deployed on a second radio frequency device side, or the second radio frequency device itself serves as a terminal device of the first radio frequency device to receive the first time information. When the first device is the first radio frequency device, the second radio frequency device may also preconfigure a specified uplink transmission resource to receive the first time information. In other words, the first radio frequency device serves as a terminal device of the second radio frequency device, and sends the first time information by using the specified uplink transmission resource. When the first device is a device between the first radio frequency device and the second radio frequency device, the first device may be a terminal device that can communicate with the first radio frequency device and the second radio frequency device.

When the first device is a satellite device or a device between a satellite device and the second radio frequency device, that the second radio frequency device receives first time information may include: The second radio frequency device receives a time information (time of day, ToD) message from the satellite device through the air interface, where the ToD message carries the first absolute time; and the second radio frequency device receives a satellite signal from the satellite device through the air interface, for example, one pulse per second (pulse per second, pps) clock signal, where the second radio frequency device may determine a time phase within 1 second based on the pulse per second (1pps) clock signal.

S403: The second radio frequency device determines clock offset information based on the first time information and second time information.

The second time information is time information synchronized by the second radio frequency device from the fronthaul interface. For example, the radio frequency control device provides a clock source for the second radio frequency device through the fronthaul interface, and the radio frequency control device and the second radio frequency device exchange a related synchronization packet through the fronthaul interface according to a synchronization protocol such as an Institute of Electrical and Electronics Engineers (institute of electrical and electronics engineers, IEEE) 1588 protocol (such as 1588 v2) or an IEEE 1588 protocol combined with a synchronous Ethernet (synchronous ethernet, SyncE) protocol, to perform time synchronization.

The second time information may include time information of a local clock synchronized by the second radio frequency device according to the foregoing protocol, for example, second absolute time accurate to second and a time phase within 1 second. Optionally, the second time information may alternatively be described as second clock synchronization phase information, local-station clock synchronization phase information, or another name. This is not limited in this embodiment of this application.

In addition, it may be understood that, in the IEEE 1588 protocol, the clock source provided by the radio frequency control device may alternatively be described as a master clock, and the local clock of the second radio frequency device may alternatively be described as a slave clock. The IEEE 1588 protocol may alternatively be referred to as a precision time protocol (precision time protocol, PTP). In the PTP protocol combined with the SyncE protocol, the master clock may alternatively be described as a SyncE+PTP master clock, and the slave clock may alternatively be described as a SyncE+PTP slave clock. The clock offset information indicates an offset between the first time information and the second time information. Corresponding to the description in S402, it may be understood that the offset between the first time information and the second time information includes two parts: an offset between the first absolute time and the second absolute time, and an offset between the time phase within 1 second determined through the air interface and the time phase within 1 second of the local clock.

For example, the first absolute time is denoted as t1, the second absolute time is denoted as t2, and the offset between the first absolute time and the second absolute time is a difference between tl and t2. The offset between the time phase within 1 second determined through the air interface and the time phase within 1 second of the local clock may be calculated by using a phase discrimination function. For example, the phase discrimination function is implemented as a phase discriminator, and the phase discriminator is a component, a functional circuit, or a software component that can discriminate a phase difference between two input signals. The second radio frequency device inputs the radio frame boundary pulse information (or the pulse per second information) obtained based on the air interface and the time phase within 1 second of the local clock into the phase discriminator, and an output of the phase discriminator is an offset between the time phase within 1 second determined through the air interface and the time phase within 1 second of the local clock. Alternatively, the second radio frequency device inputs the time phase within 1 second determined through the air interface and the time phase within 1 second of the local clock into the phase discriminator, and an output of the phase discriminator is an offset between the time phase within 1 second determined through the air interface and the time phase within 1 second of the local clock.

S404: The second radio frequency device sends the clock offset information to a second device.

Optionally, the second device may be the radio frequency control device connected to the second radio frequency device, and the second radio frequency device may send the clock offset information to the radio frequency control device through the fronthaul interface. Alternatively, in the distributed base station shown in FIG. 3B, the second device may be the switch device corresponding to the fronthaul interface, and the second radio frequency device may send the clock offset information to the switch device through the fronthaul interface. In addition, the second device may alternatively be a network management device, for example, the network management device 1 or the network management device 2 shown in FIG. 3B. When sending the clock offset information to the network management device 1, the second radio frequency device may send the clock offset information to the radio frequency control device through the fronthaul interface, so that the radio frequency control device sends the clock offset information to the network management device 1 through the backhaul interface. When sending the clock offset information to the network management device 2, the second radio frequency device may send the clock offset information to the switch device corresponding to the fronthaul interface through the fronthaul interface, so that the switch device sends the clock offset information to the connected network management device 2.

Optionally, the second device may be defined in a predefined manner as one of the radio frequency control device, or the switch device or the network management device corresponding to the fronthaul interface. Alternatively, the second device may be indicated by the radio frequency control device or the network management device. For example, before S404 is performed, S4041 may be further performed: The radio frequency control device sends second information to the second radio frequency device, where the second information indicates identification information of the second device.

Optionally, when sending the clock offset information to the second device, the second radio frequency device may further send the identification information of the first device to the second device. Based on such a design, the second device can quickly determine a device with which the second radio frequency device calculates a clock offset, so that efficiency of performing fault handling, by the second device, on the transmission path corresponding to the fronthaul interface can be improved.

S405: The second device determines, based on the clock offset information, whether a fault exists on a transmission path corresponding to a fronthaul interface.

For example, when the clock offset information is greater than a preset clock offset information threshold, the second device may determine that a fault exists on the transmission path corresponding to the fronthaul interface. That a fault exists on the transmission path corresponding to the fronthaul interface may include: An interface on the radio frequency control device corresponding to the fronthaul interface is faulty, a node on the transmission path such as a switch device of a fronthaul network is faulty, a transmission latency compensation error occurs on the transmission path, the fronthaul interface is faulty, the second radio frequency device corresponding to the fronthaul interface is faulty, or the like. Further, the second device may adopt a fault isolation manner, for example, disconnect a connection between the second radio frequency device and the radio frequency control device, so as to avoid signal interference of the second radio frequency device to another normal radio frequency device such as the first radio frequency device. The second device may further indicate a fault recovery policy, and the second radio frequency device may re-connect to the radio frequency control device when the fault on the transmission path corresponding to the fronthaul interface is recovered.

For another example, when the clock offset information is less than or equal to the preset clock offset information threshold, the second device may determine that no fault exists on the transmission path corresponding to the fronthaul interface, and does not need to perform processing operations such as fault isolation and recovery.

In the foregoing manners provided in this embodiment of this application, for one radio frequency device, a plurality of clock sources are introduced, and fault determining and processing are performed on a fronthaul interface corresponding to the radio frequency device based on clock offsets between the plurality of clock sources, without a need of manual intervention or an additional test instrument, thereby reducing operation and maintenance costs and improving fault handling efficiency.

It may be understood that the communication method provided in this embodiment of this application may be further used for fault handling corresponding to a fronthaul interface in another scenario, for example, used for troubleshooting corresponding to a fronthaul interface between a distributed unit (distributed unit, DU) and a radio unit (radio unit, RU) in an O-RAN system. The DU in the O-RAN system may provide a clock source for the RU, the DU is equivalent to the BBU or the radio frequency control device of the foregoing distributed base station, and the RU is equivalent to the radio frequency device of the foregoing distributed base station. In addition, the DU may alternatively be referred to as an O-DU, and the RU may alternatively be referred to as an O-RU. This is not limited in this embodiment of this application.

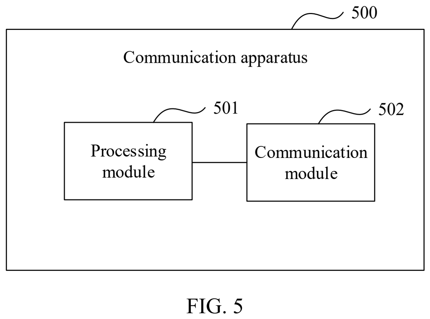

Based on a same idea, refer to FIG. 5. An embodiment of this application provides a communication apparatus 500. The communication apparatus 500 includes a processing module 501 and a communication module 502. The communication apparatus 500 may be a first device, or may be an apparatus that is applied to the first device or that is used in a matching manner with the first device and that can implement a method performed on a first device side. The communication apparatus 500 may be a second device, or may be an apparatus that is applied to the second device or that is used in a matching manner with the second device and that can implement a method performed on a second device side. The communication apparatus 500 may be a radio frequency device, or may be an apparatus that is applied to a second radio frequency device or that is used in a matching manner with the second radio frequency device and that can implement a method performed on a second radio frequency device side. The communication apparatus 500 may be a radio frequency control device, or may be an apparatus that is applied to the radio frequency control device or that is used in a matching manner with the radio frequency control device and that can implement a method performed on a radio frequency control device side.

The communication module may alternatively be referred to as a transceiver module, a transceiver, a transceiver device, a transceiver apparatus, or the like. The processing module may alternatively be referred to as a processor, a processing board, a processing unit, a processing apparatus, or the like. Optionally, the processing module may control the communication module to perform a sending operation and a receiving operation of the first device, the second device, the second radio frequency device, or the radio frequency control device in the foregoing method.

It should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this embodiment of this application is an example, is merely division into logical functions, and may be other division during actual implementation. In addition, functional modules in examples of embodiments of this application may be integrated into one processor, each of the functional modules may exist alone physically, or two or more functional modules may be integrated into one module. The integrated module may be implemented in a form of hardware, or may be implemented in a form of a software functional module.

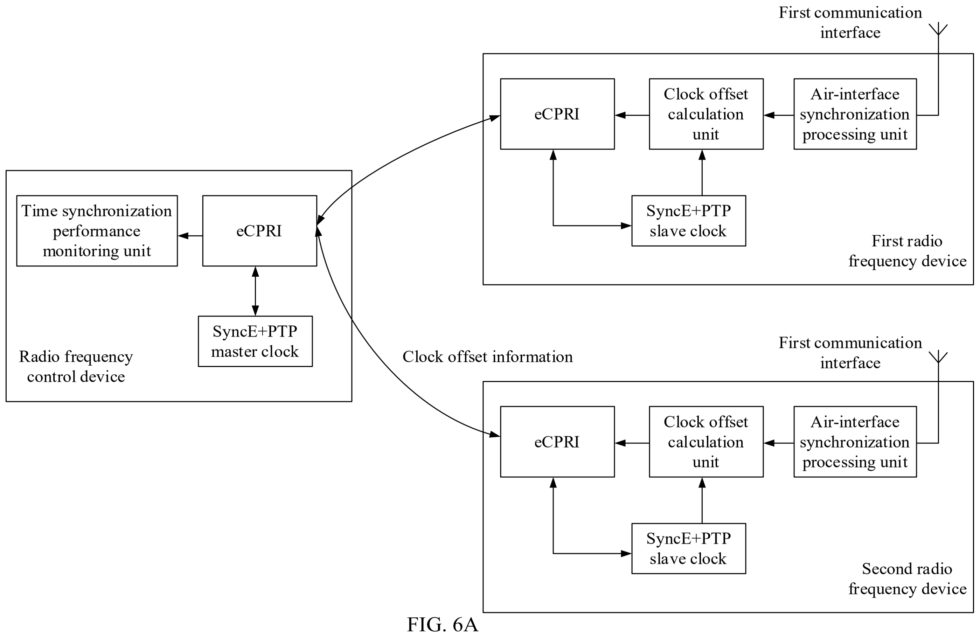

In embodiments of this application, for example, functions of the processing module and/or the communication module in the first device, the second device, the second radio frequency device, and the radio frequency control device are further divided. As shown in FIG. 6A, the communication module (shown by using an eCPRI module as an example in the figure) in the radio frequency control device corresponds to a fronthaul interface, and is configured to exchange, with a first radio frequency device or the second radio frequency device, synchronization packets corresponding to the IEEE 1588 protocol and the SyncE protocol. An eCPRI of the radio frequency control device sends a synchronization packet provided by a SyncE+PTP master clock, and receives a packet fed back by a SyncE+PTP slave clock from the fronthaul interface.

The communication module in the radio frequency device includes a first communication interface corresponding to an air interface, and a second communication interface corresponding to the fronthaul interface. The processing module in the radio frequency device includes an air-interface synchronization processing unit and a clock offset calculation unit. The first communication interface may be integrated on the air-interface synchronization processing unit.

The air-interface synchronization processing unit receives, through the first communication interface, first time information sent by the first device, and parses the first time information to output first absolute time and radio frame boundary pulse information (or a pulse per second clock signal). The second communication interface exchanges synchronization packets corresponding to the IEEE 1588 protocol and the SyncE protocol with the radio frequency control device. For example, the second communication interface is implemented by using an eCPRI. The eCPRI in the radio frequency device transfers a received synchronization packet to the SyncE+PTP slave clock, and outputs a packet fed back by the SyncE+PTP slave clock to the fronthaul interface. After interaction and synchronization according to the IEEE 1588 protocol and the SyncE protocol, the SyncE+PTP slave clock outputs the second absolute time of the local clock and the time phase within 1 second.

An output of the air-interface synchronization processing unit is used as one input to the clock offset calculation unit, and the second absolute time of the local clock and the time phase within 1 second are used as another input to the clock offset calculation unit. The clock offset calculation unit may directly calculate the offset between the first absolute time and the second absolute time, and calculate, by using a phase discriminator, the offset between the time phase within 1 second determined through the air interface and the time phase within 1 second of the local clock.

Optionally, when the second device is a radio frequency control device, as shown in FIG. 6A, the processing module in the radio frequency control device includes a time synchronization performance monitoring unit. An eCPRI in the radio frequency control device is further configured to receive clock offset information sent by the second radio frequency device, and send the clock offset information to the time synchronization performance monitoring unit. The time synchronization performance monitoring unit is configured to perform, based on the clock offset information, fault handling on the transmission path corresponding to the fronthaul interface. It may be understood that the time synchronization performance monitoring unit may alternatively be deployed in another implementation of the second device, for example, a switch device or a network management device corresponding to the fronthaul interface. Details are not described in this embodiment of this application.

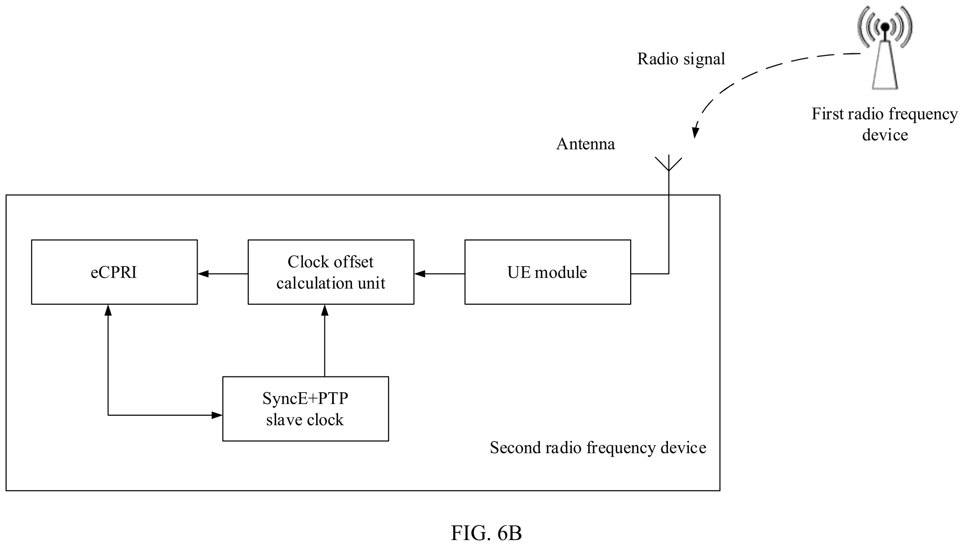

Optionally, as shown in FIG. 6B, when the first device is a first radio frequency device, the air-interface synchronization processing unit may be implemented by using a UE module, and the UE module has a function of implementing air interface-based time-frequency synchronization. The UE module accesses the first radio frequency device, and an antenna (that is, the foregoing first communication interface) on the UE module receives, from an air interface, a radio signal sent by the first radio frequency device by using a downlink transmission resource, so as to determine radio frame boundary pulse information corresponding to the radio signal.

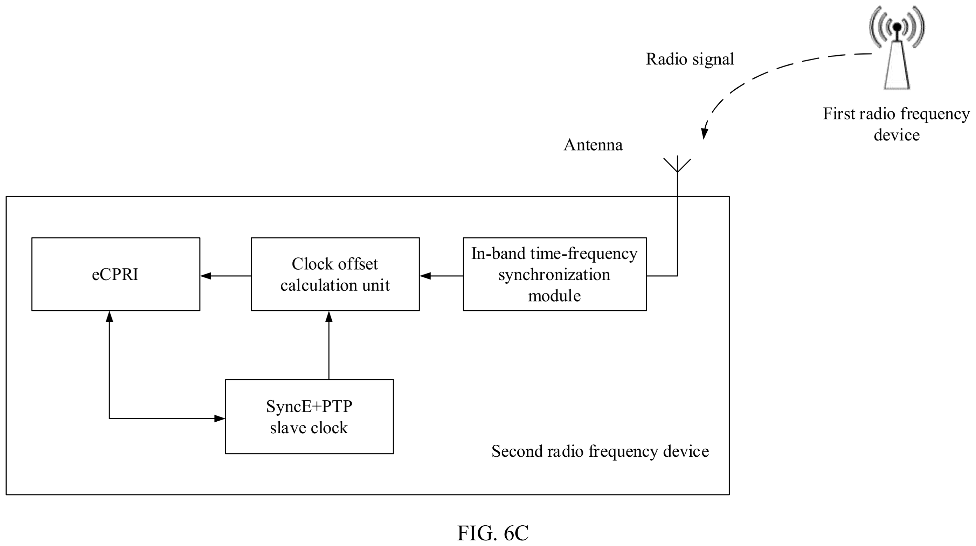

As shown in FIG. 6C, when the first device is a first radio frequency device, the air-interface synchronization processing unit may alternatively be implemented by using an in-band time-frequency synchronization module. The in-band time-frequency synchronization module implements, by monitoring a synchronization channel of a neighboring station, a function similar to the UE module being synchronized to a base station. For example, in a time division duplex (time division duplex, TDD) mode, a part of an uplink transmission resource (for example, an uplink slot) between a terminal and a base station is allocated for air-interface synchronization. To be specific, the in-band time-frequency synchronization module monitors and receives, through the air interface based on a part of an uplink transmission resource between the second radio frequency device and the terminal device by using the antenna (that is, the first communication interface) deployed by the in-band time-frequency synchronization module, a radio signal sent by the first radio frequency device to the terminal device. This is similar to a time and frequency synchronization function between the terminal and the base station, implementing time synchronization between the in-band time-frequency synchronization module and the first radio frequency device. Then, the in-band time-frequency synchronization module may output first absolute time and/or radio frame boundary pulse information corresponding to the radio signal.

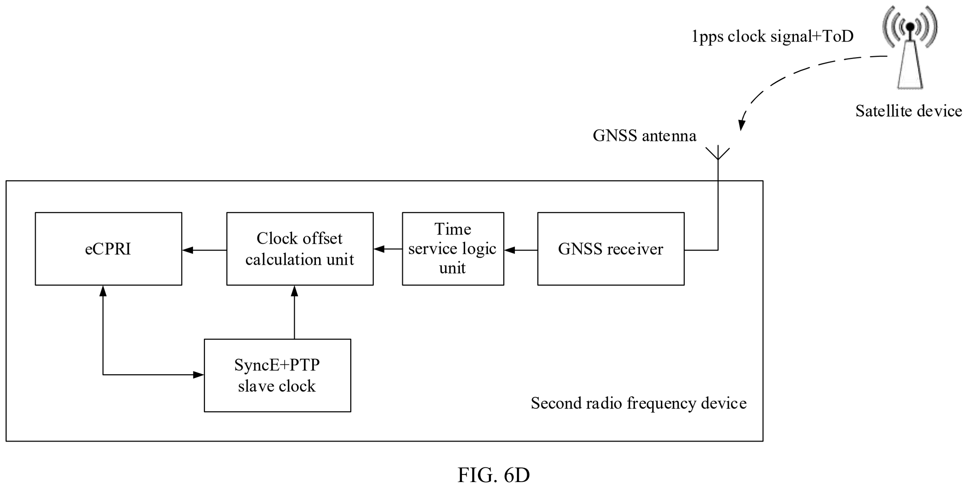

As shown in FIG. 6D, when the first device is a satellite device, the air-interface synchronization processing unit may include a global navigation satellite system (global navigation satellite system, GNSS) receiver. The first communication interface is implemented by using an antenna. The GNSS receiver receives and outputs, by using the antenna, a 1pps clock signal and a ToD message that are sent by the satellite device. The air-interface synchronization processing unit may include a time service logic unit. An output of the GNSS receiver is used as an input to the time service logic unit. The time service logic unit may further determine a time phase within 1 second based on the 1pps clock signal, and determine first absolute time from the ToD message. The time service logic unit outputs the first absolute time and the time phase within 1 second to the clock offset calculation unit.

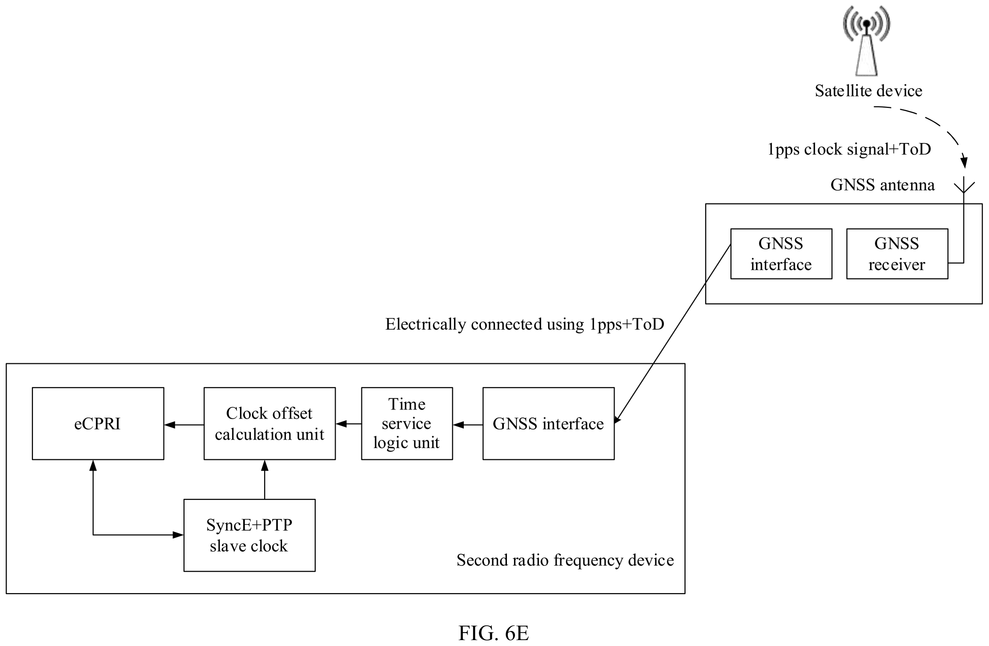

As shown in FIG. 6E, the first device is a device between the satellite device and the second radio frequency device, for example, a GNSS externally connected to the second radio frequency device. The air-interface synchronization processing unit may include a time service logic unit, and the first communication interface is implemented by using a GNSS interface. Correspondingly, the GNSS includes the GNSS interface, a GNSS receiver, and a GNSS antenna. A GNSS interface in the second radio frequency device is electrically connected to the GNSS interface in the GNSS by using 1pss+ToD, to support transmission of a 1pps clock signal and a ToD message. In addition, for functions of the time service logic unit and the clock offset calculation unit, refer to descriptions in FIG. 6D for understanding. Details are not described in this embodiment of this application.

Based on a same technical concept, an embodiment of this application further provides a communication apparatus 700. For example, the communication apparatus 700 may be a chip or a chip system. Optionally, in this embodiment of this application, the chip system may include a chip, or may include a chip and another discrete device.

The communication apparatus 700 may include at least one processor 710. Optionally, the processor 710 is coupled to a memory. The memory may be located in the apparatus. Alternatively, the memory may be integrated with the processor. Alternatively, the memory may be located outside the apparatus. For example, the communication apparatus 700 may further include at least one memory 720.

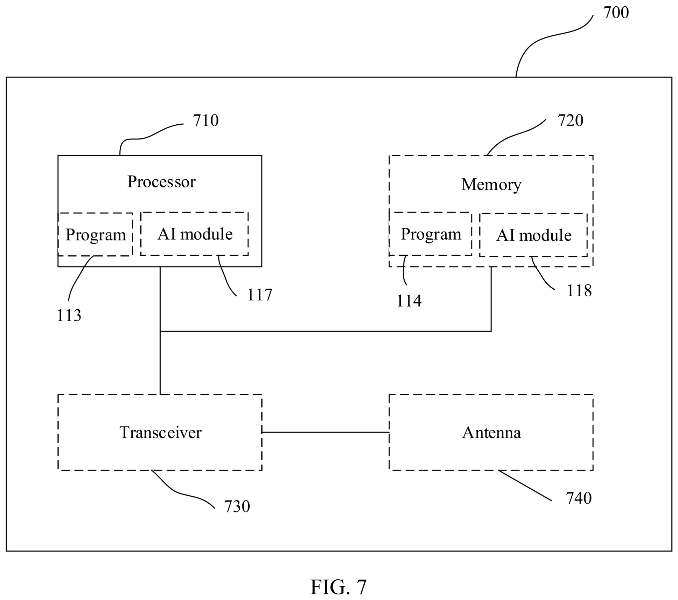

The processor 710 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. For example, the processor 710 may be a baseband processor or a central processing unit. The baseband processor may be configured to process a communication protocol and communication data. The central processing unit may be configured to: control a communication apparatus (for example, a radio frequency control device, a radio frequency device, a RAN node, a terminal, or a chip), execute a software program, and process data of the software program. When the communication apparatus 700 is applied to the foregoing second radio frequency device, in a design, the processor 710 may include a program 113 (which may alternatively be referred to as code or an instruction sometimes), and the program 113 may run on the processor 710, so that the communication apparatus 700 performs the method on the second radio frequency device side in the foregoing embodiment. In another possible design, the communication apparatus 700 includes a circuit (not shown in FIG. 7), and the circuit is configured to implement the function of the second radio frequency device side in the following embodiments. Optionally, the processor 710 may further store data.

The memory 720 may be a non-volatile memory, for example, a hard disk drive (hard disk drive, HDD) or a solid-state drive (solid-state drive, SSD), or a volatile memory (volatile memory), for example, a random access memory (random access memory, RAM). The memory is any other medium that can be used to carry or store expected program code in a form of an instruction or a data structure and that can be accessed by a computer, but is not limited thereto. The memory in embodiments of this application may alternatively be a circuit or any other apparatus that can implement a storage function, and is configured to store a program and/or data. For example, the memory 720 stores a program 114 (which may alternatively be referred to as code or an instruction sometimes), and the program 114 may run on the processor 710, so that the communication apparatus 700 performs the method described in the foregoing method embodiment.

Optionally, the processor 710 may include an AI module 117, and/or the memory 720 may include an artificial intelligence (artificial Intelligence, AI) module 118. The AI module is configured to implement an AI-related function. The AI module may be implemented by using software, hardware, or a combination of software and hardware. For example, the AI module may include a radio access network intelligent controller (RAN intelligent controller, RIC) module. For example, the AI module may be a near-real-time RIC or a non-real-time RIC.

The communication apparatus 700 may further include a transceiver 730 and/or an antenna 740. The transceiver 730 may alternatively be sometimes referred to as a transceiver unit, a transceiver machine, a transceiver circuit, a transceiver, or the like, and is configured to implement a transceiver function of the communication apparatus. For example, the transceiver 730 may be a transceiver machine, a circuit, a bus, a module, a pin, or another type of communication interface. When the communication apparatus 700 is a chip-type apparatus or circuit, the transceiver 730 in the apparatus 700 may alternatively be an input/output circuit, and may input information (or referred to as receiving information) and output information (or referred to as sending information). Optionally, when the communication apparatus 700 includes an antenna 740, the transceiver 730 is configured to implement the transceiver function of the communication apparatus by using the antenna 740.

The coupling in this embodiment of this application may be an indirect coupling or a communication connection between apparatuses, units, or modules in an electrical form, a mechanical form, or another form, and is used for information exchange between the apparatuses, the units, or the modules. The processor 710 may operate in collaboration with the memory 720, the transceiver 730, and/or the antenna 740. A specific connection medium between the processor 710, the memory 720, the transceiver 730, and/or the antenna 740 is not limited in this embodiment of this application. For example, the processor 710, the memory 720, and the transceiver 730 are connected to each other by using a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

Based on the foregoing example, an embodiment of this application further provides a communication system, including a first device, a radio frequency control device, a radio frequency device, and a second device. The communication system may implement the communication method provided in the example shown in FIG. 4B.

The technical solutions provided in this embodiment of this application may be fully or partially implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, all or some of the procedures or functions according to the embodiments of this application are generated. The computer may be a general-purpose computer, a special-purpose computer, a computer network, a network management device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on the premise that there is no logical contradiction, examples may be mutually referenced. For example, methods and/or terms in the method embodiments may be mutually referenced, functions and/or terms in the apparatus embodiments may be mutually referenced, and functions and/or terms between the apparatus examples and the method examples may be mutually referenced.

It is clear that, a person skilled in the art may make various modifications and variations to embodiments without departing from the scope of embodiments of this application. In this way, embodiments of this application are also intended to cover these modifications and variations provided that they fall within the scope of the claims of embodiments of this application and equivalent technologies thereof.

## Claims

1. A communication method, comprising:
receiving first time information, wherein the first time information is time information transmitted through an air interface; and
sending clock offset information, wherein the clock offset information indicates an offset between the first time information and second time information, and the second time information is time information synchronized through a fronthaul interface.

2. The method according to claim 1, wherein receiving the first time information comprises:
receiving first information, wherein the first information indicates identification information of a first device; and
receiving the first time information, wherein the first time information is from the first device.

3. The method according to claim 2, wherein the first device is a first radio frequency device, a satellite device, or a relay device, and the relay device is a device between a second radio frequency device corresponding to the fronthaul interface and the first radio frequency device or the satellite device.

4. The method according to claim 2 or 3, wherein the first device is time-synchronized with a radio frequency control device corresponding to the fronthaul interface.

5. The method according to claim 3 or 4, wherein the clock offset information is used for fault determining for a transmission path corresponding to the fronthaul interface.

6. The method according to any one of claims 1 to 5, wherein the first time information is transmitted on an uplink resource.

7. The method according to any one of claims 1 to 6, wherein sending the clock offset information comprises:
receiving second information, wherein the second information indicates identification information of a second device; and
sending the clock offset information to the second device.

8. The method according to claim 7, wherein the second device is a radio frequency control device corresponding to the fronthaul interface, or a switch device or a network management device corresponding to the fronthaul interface.

9. The method according to any one of claims 1 to 8, wherein the clock offset information comprises the identification information of the first device.

10. A communication method, comprising:
receiving clock offset information, wherein the clock offset information indicates an offset between first time information and second time information, the first time information is time information transmitted through an air interface, and the second time information is time information synchronized through a fronthaul interface; and
determining, based on the clock offset information, whether a fault exists on a transmission path corresponding to the fronthaul interface.

11. The method according to claim 10, further comprising:
sending the clock offset information to a network management device.

12. The method according to claim 10 or 11, wherein the first time information is from a first device, and the clock offset information comprises identification information of the first device.

13. The method according to claim 12, wherein the first device is a first radio frequency device, a satellite device, or a relay device, and the relay device is a device between a second radio frequency device corresponding to the fronthaul interface and the first radio frequency device or the satellite device.

14. The method according to claim 12 or 13, wherein the first device is time-synchronized with a radio frequency control device corresponding to the fronthaul interface.

15. A communication apparatus, configured to implement the method according to any one of 1 to 9.

16. A communication apparatus, configured to implement the method according to any one of 10 to 14.

17. A communication apparatus, comprising a processor, wherein the processor is coupled to a memory, and the processor is configured to perform the method according to any one of claims 1 to 9.

18. A communication apparatus, comprising a processor, wherein the processor is coupled to a memory, and the processor is configured to perform the method according to any one of claims 10 to 14.

19. A communication system, comprising the communication apparatus according to claim 15 or 17, and the communication apparatus according to claim 16 or 18.

20. A computer-readable storage medium, wherein the computer-readable storage medium stores instructions, and when the instructions are run on a computer, the computer is enabled to perform the method according to any one of claims 1 to 9 or the method according to any one of claims 10 to 14.

21. A computer program product, comprising instructions, wherein when the instructions are run on a computer, the computer is enabled to perform the method according to any one of claims 1 to 9 or the method according to any one of claims 10 to 14.
